# EUROPEAN PATENT SPECIFICATION

(11) **EP 2 821 661 B1**
(45) Date of publication and mention of the grant of the patent: **31.10.2018**
(21) Application number: 14172092.0
(22) Date of filing: 12.06.2014
(51) Int. Cl.: F16C 33/78, F16C 33/74, B29C 45/37, F16J 15/32, F16C 33/66

(54) **Sealing device**
Dichtungsvorrichtung
Dispositif d'étanchéité

(30) Priority: 03.07.2013 JP 2013139683
(43) Date of publication of application: 07.01.2015
(73) Proprietor: NOK CORPORATION, Tokyo 105-8585 (JP)
(72) Inventor: Furuyama, Hideyuki, Fukushima-shi, Fukushima 960-1102 (JP); Yamaguchi, Yoshihisa, Fukushima-shi, Fukushima 960-1102 (JP); Watanabe, Toshiki, Fukushima-shi, Fukushima 960-1102 (JP); Shonai, Masaru, Fukushima-shi, Fukushima 960-1102 (JP)
(74) Representative: TBK

(56) References cited:
- JP-A- 2004 150 591
- JP-A- 2005 344 928
- JP-A- 2012 167 764
- US-A1- 2007 241 515
- US-A1- 2012 223 266

## Description

### BACKGROUND OF THE INVENTION

### Field of the Invention

The present invention relates to a sealing device according to a sealing technology, and more particularly to a sealing device (a bearing seal) for inhibiting a foreign matter in an outer portion of a bearing from entering into an inner portion of the bearing by being installed to an opening portion between an outer ring and an inner ring of the bearing. The sealing device according to the present invention is used, for example, in a bearing portion for a transmission of a vehicle such as a motor vehicle, or is used in a bearing portion of the other general purpose machine.

### Description of the Conventional Art

A bearing seal 51 shown in Fig. 4 has been conventionally known, see for example Patent Document 1 referenced below, and the bearing seal 51 is constructed by combination of a first seal ring 52 which is attached to an inner ring 62 of a bearing 61 and slidably comes into close contact with an outer ring 63, and a second seal ring 53 which is attached contrarily to the outer ring 63 and slidably comes into close contact with the inner ring 62.

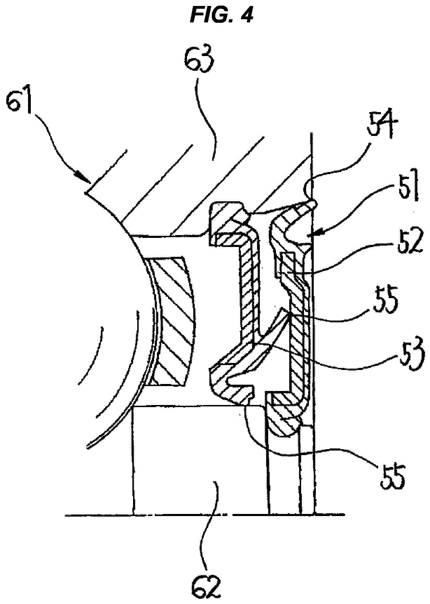

Since the bearing seal 51 in Fig. 4 mentioned above is constructed by the combination of a plurality of seal rings 52 and 53, the bearing seal 51 is expected to exert an excellent sealing performance. However, since a plurality of sliding portions 54 and 55 are set by a plurality of seal rings 52 and 53, a sliding torque is large as a whole. Therefore, the bearing seal 51 has a problem that the bearing seal 51 can not meet the needs of torque reduction relating to an improvement of a fuel consumption in recent years.

US 2012/0223266 A1 discloses a rolling bearing having high sealing performance and a throttle valve device and an ABS device, which includes such rolling bearing. A metal core with a bent portion extending along a groove surface of the outer circumferential side of a V-shaped groove and an inner peripheral portion which extends in a radial direction beyond the deepest portion of the V-shaped groove toward a central axis from an inner circumferential side end of the bent portion, forms a gap in the radial direction within a region between an end of the inner peripheral portion of the metal core and an outer circumferential surface of an inner ring. The rigidity of an inner circumferential portion of the sealing member is ensured and a lip portion can be prevented from being rolled up by the external pressure.

JP 2004-150591 A discloses a seal which has a rubber molding lip portion (a whole elastic body) formed of a rubber molding whose loss tangent tan Δ is the maximum value of 0.10 to 0.60 at a temperature of 20°C - 70°C.

In general, as means for reducing the torque, there is a method of thinning a lip. However, in the case that a tension force is lowered due to the thinning of the lip, foreign matter in an outer portion of the bearing tends to enter into an inner portion of the bearing.

Patent Document 1: Japanese Unexamined Patent Publication No. 9-196071

### SUMMARY OF THE INVENTION

### Problem to be Solved by the Invention

The present invention is made by taking the above points into consideration, and an object of the present invention is to provide a sealing device which can meet the needs of torque reduction in recent years, and can exert an excellent sealing performance.

### Means for Solving the Problem

In order to achieve the object mentioned above, a sealing device according to a first aspect of the present invention is a sealing device which is installed to an opening portion between an outer ring and an inner ring of a bearing and inhibits foreign matter in an outer portion of the bearing from entering into an inner portion of the bearing, the sealing device having an attaching ring which is attached to the outer ring, and a seal lip which is retained to the attaching ring and slidably comes into close contact with the inner ring, wherein the seal lip integrally has a first inclined surface portion which is diagonally formed toward an inner side in a diametrical direction and toward an inner side of the bearing from a base end portion of a lip, and a second inclined surface portion which is diagonally formed toward an inner side in a diametrical direction and toward an outer side of the bearing from a leading end of the first inclined surface portion, the second inclined surface portion is set to a sliding portion in relation to the inner ring, and a satin finished processing for enlarging a surface roughness of the sliding portion is applied to the sliding portion.

Further, in the sealing device according to the first aspect of the present invention, a leading end of the second inclined surface portion is arranged at the same position in an axial direction as a thickness surface of an inner peripheral end portion of the attaching ring, the remaining positions of the second inclined surface portion and the first inclined surface portion are arranged in an inner side of the bearing than the thickness surface of the inner peripheral end portion of the attaching ring, the first inclined surface portion is formed into a shape that a thickness is reduced little by little from its base end toward its leading end, and the second inclined surface portion is formed into a shape that a thickness is approximately fixed from its base end toward its leading end.

Further, a sealing device according to a second aspect of the present invention is the sealing device described in the first aspect mentioned above, wherein the seal lip integrally having the first inclined surface portion and the second inclined surface portion is formed into an approximately V-shaped form in its cross section.

Further, a sealing device according to a third aspect of the present invention is the sealing device described in the first aspect, or the second aspect mentioned above, wherein the attaching ring is constructed by a metal ring and is metallically fitted to an inner peripheral surface of the outer ring.

The sealing device according to the present invention provided with the structure mentioned above is provided with the seal lip which integrally has the first inclined surface portion which is diagonally formed toward the inner side in the diametrical direction and toward the inner side of the bearing from the base end portion of the lip, and the second inclined surface portion which is diagonally formed toward the inner side in the diametrical direction and toward the outer side of the bearing from the leading end of the first inclined surface portion, and in which the second inclined surface portion is set to the sliding portion in relation to the inner ring, as the seal lip which is combined with the attaching ring. Therefore, the seal lip tends to elastically deform in the diametrical direction in such a manner that the first inclined surface portion and the second inclined surface portion change their intersecting angle, and a fastening margin in relation to the inner ring is easily set to be small. Further, since the satin finished processing for enlarging the surface roughness of the sliding portion is applied to the sliding portion which is constructed by the second inclined surface portion, the satin finished surface tends to reserve an oil (a gear oil in the outer portion of the bearing and a bearing grease in the inner portion of the bearing) in its concave portion, and has a high lubricity. Therefore, reduction of the sliding torque can be realized on the basis of the combination of the lip shape which tends to be elastically deformed in the diametrical direction, and the sliding surface shape which tends to reserve the oil.

Further, since there is provided the inclined surface portion which is formed diagonally toward the inner side in the diametrical direction and the outer side of the bearing from the leading end of the first inclined surface portion, as the second inclined surface portion which slidably comes into close contact with the inner ring of the bearing, the second inclined surface portion elastically deforms so as to be pressed to the inner ring of the bearing in the case that the external pressure acts on the second inclined surface portion from the outer side of the bearing. Therefore, in the case that the foreign matter is going to enter into the inner portion of the bearing in such a manner that the foreign matter slips into the gear oil in the outer portion of the bearing, the second inclined surface portion elastically deforms so as to be pressed to the inner ring of the bearing. Therefore, it is possible to effectively seal the foreign matter included in the gear oil.

It is preferable that the seal lip integrally having the first inclined surface portion and the second inclined surface portion in the structure mentioned above is formed into the approximately V-shaped form in its cross section. Since an angle of incline of the second inclined surface portion in relation to the outer peripheral surface of the inner ring is set to be larger in the seal lip which is formed into the approximately V-shaped form in its cross section, in comparison with the seal lip which is formed into the approximately C-shaped form in its cross section, the second inclined surface portion tends to elastically deform in the diametrical direction.

Further, it is preferable that the leading end of the second inclined surface portion is arranged at the same position in the axial direction as the thickness surface of the inner peripheral end portion of the attaching ring, the remaining positions of the second inclined surface portion and the first inclined surface portion are arranged in the inner side of the bearing than the thickness surface of the inner peripheral end portion of the attaching ring, the first inclined surface portion is formed into the shape that the thickness is reduced little by little from its base end toward its leading end, and the second inclined surface portion is formed into the shape that the thickness is approximately fixed from its base end toward its leading end, in a whole of the seal lip. According to the structure, since the leading end of the second inclined surface portion which is formed comparatively thin is arranged between the thickness surface of the inner peripheral end portion of the attaching ring and the outer peripheral surface of the inner ring of the bearing in the inner peripheral side of the thickness surface of the inner peripheral end portion of the attaching ring, the seal lip elastically deforms in the diametrical direction like a bellows in such a manner as to change the intersecting angle of the first inclined surface portion and the second inclined surface portion, in the case that the inner ring which is the other end of the sliding is eccentric in relation to the outer ring of the bearing which is the attaching side of the sealing device. Therefore, there is a feature that the seal lip tends to follow the eccentricity.

### Effect of the Invention

The present invention achieves the following effects.

More specifically, according to the sealing device of the present invention, as mentioned above, the reduction of the sliding torque can be realized on the basis of the combination of the lip shape which tends to elastically deforms in the diametrical direction and the sliding surface shape which tends to reserve the oil. On the other hand, it is possible to effectively seal the foreign matter included in the gear oil. Therefore, it is possible to provide the sealing device which can meet the needs of the reduction of torque in recent years according to a desired object of the present invention, and can further exert the excellent sealing performance. Further, the seal lip easily deforms in the diametrical direction by forming the seal lip into the approximately V-shaped form in its cross section, or specifying the position in the axial direction and the thickness of the seal lip in relation to the attaching ring as mentioned above, and the seal lip is excellent in the eccentricity following performance. The attaching ring may be rubber fitted to the inner peripheral surface of the outer ring by attaching a rubber-like elastic body to the attaching ring, however, it is possible to expect an increase of a fitting force and a reduction of a cost by employing a metal fitting.

### BRIEF EXPLANATION OF THE DRAWINGS

Fig. 1 is a cross sectional view of a substantial part of a sealing device according to an embodiment of the present invention;
Fig. 2 is an enlarged view of the substantial part in Fig. 1;
Fig. 3 is an explanatory view showing an example of an installed state of the sealing device; and
Fig. 4 is a cross sectional view of a substantial part of a sealing device according to a prior art.

### DETAILED DESCRIPTION OF PREFERRED EMBODIMENT

The following embodiments are included in the present invention.
(1) The lip is formed into a mold lip, the satin finished surface is added to a whole of the lip sliding portion, and the lip surface roughness is enlarged. The satin finished surface is given by applying an electric discharge machining to a mold.
(2) A fluid lubricating effect is improved by adding the satin finished surface, and the torque is reduced. There is an effect that an oil film becomes thicker in a narrowed gap and an aeration tends to be generated in an expanded gap, on the basis of the roughness by the satin finished surface.

### Embodiments

Next, a description will be given of an embodiment according to the present invention with reference to the accompanying drawings.

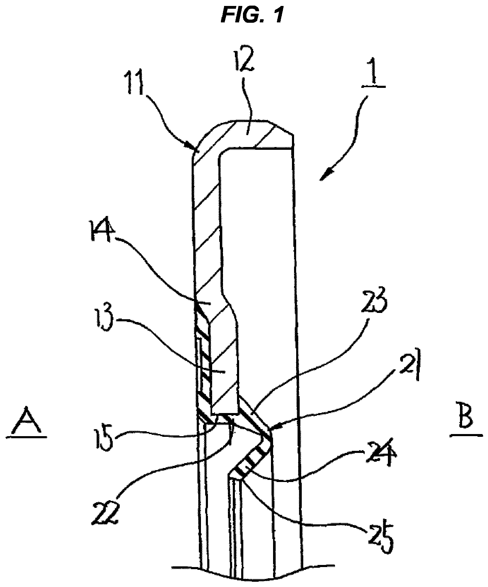

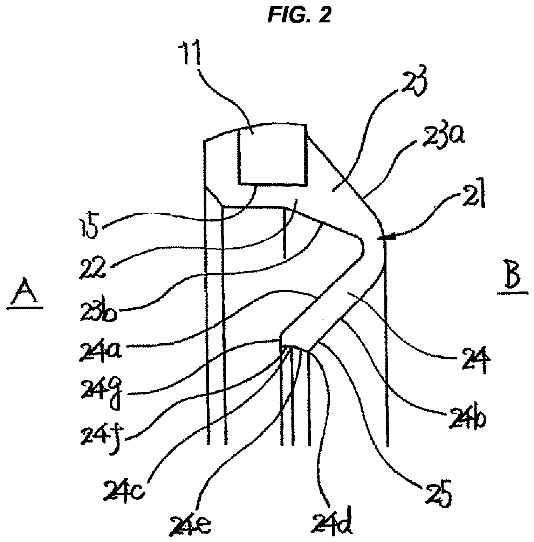

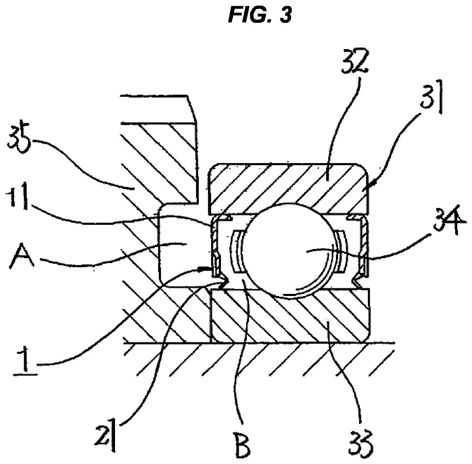

Figs. 1 and 2 show a sealing device 1 according to an embodiment of the present invention, and Fig. 3 shows an example of an installed state of the sealing device 1. As shown in Fig. 3, the sealing device 1 according to the embodiment is constructed as a sealing device which is installed to an opening portion between an outer ring 32 and an inner ring 33 of a bearing 31 and inhibits a foreign matter (not shown) in an outer portion A of the bearing from entering into an inner portion B of the bearing, and is structured such as to have an attaching ring 11 which is attached to the outer ring 32 and a seal lip 21 which is retained to the attaching ring 11 and slidably comes into close contact with the inner ring 33.

In the case that the sealing device 1 is used in a bearing portion for a transmission of a vehicle such as a motor vehicle, a gear 35 is arranged beside the bearing 31, and a gear oil (not shown) is supplied to the gear 35. Therefore, the foreign matter (size: 50 µm or more) such as a metal powder exists in such a manner that the foreign matter slips into the gear oil. If the foreign matter enters into the inner portion B of the bearing, a problem that a rolling body 34 is damaged is generated. Accordingly, the foreign matter in the outer portion A of the bearing is inhibited from entering into the inner portion B of the bearing, by installing the sealing device 1. Further, the sealing device 1 accessorily has a function of sealing a bearing grease (not shown) in the inner portion B of the bearing so as to prevent the bearing grease from leaking out.

As shown in Fig. 1, the sealing device 1 has the attaching ring 11 which is attached to the outer ring 32 of the bearing 31, and the seal lip 21 which is retained to the attaching ring 11 and slidably comes into close contact with the inner ring 33.

The attaching ring 11 is constructed by a metal ring, and has a tubular portion 12 which is fitted to an inner peripheral surface of the outer ring 32 of the bearing 31, and a flange portion 13 is integrally formed from an end portion in the outer side A of the bearing of the tubular portion 12 (one side in an axial direction, a left side in the drawing) toward an inner side in a diametrical direction. A step-like bending portion 14 is provided in the middle in a diametrical direction of the flange portion 13, the bending portion 14 bending the flange portion 13 to the inner side B of the bearing (the other side in the axial direction, a right side in the drawing).

The seal lip 21 is constructed by a rubber-like elastic body which is attached (vulcanization bonded) to the attaching ring 11, has a lip base end portion 22 which is attached to an inner peripheral end portion of the attaching ring 11, and is structured such that a first inclined surface portion 23 is integrally formed from the base end portion 22 diagonally toward the inner side in the diametrical direction and toward the inner side B of the bearing, and a second inclined surface portion 24 is integrally formed from a leading end of the first inclined surface portion diagonally toward the inner side in the diametrical direction and toward the outer side A of the bearing.

The second inclined surface portion 24 has a sliding portion 25 in relation to the inner ring 33 of the bearing 31, and is structured such that a satin finished processing (not shown) for enlarging a surface roughness of the sliding portion 25 is applied to the sliding portion 25.

As shown in Fig. 2 in an enlarged manner, the first inclined surface portion 23 has an outer peripheral surface 23a in which a diameter is reduced little by little from the outer side A of the bearing toward the inner side B of the bearing, and an inner peripheral surface 23b in which a diameter is reduced little by little from the outer side A of the bearing toward the inner side B of the bearing in the same manner.

The second inclined surface portion 24 has an outer peripheral surface 24a in which a diameter is reduced little by little from the inner side B of the bearing toward the outer side A of the bearing, and an inner peripheral surface 24b in which a diameter is reduced little by little from the inner side B of the bearing toward the outer side A of the bearing in the same manner. Further, the second inclined surface portion 24 has a leading end surface 24c, and the leading end surface 24c is constructed by a combination of an inclined surface 24e which is provided continuously from the inner peripheral surface 24b via a lip end 24d and is enlarged its diameter little by little from the inner side B of the bearing toward the outer side A of the bearing, a cylindrical tube-like surface 24f which is provided continuously from the inclined surface 24e and is approximately fixed in its diameter, and a flat end surface 24g which is provided continuously from the tube-like surface 24f toward the outer peripheral surface 24a and is formed into an axially vertical plane shape.

As mentioned above, the satin finished processing for enlarging the surface roughness of the sliding portion 25 is applied to the sliding portion 25 of the second inclined surface portion 24, however, the satin finished processing is applied to a position which runs into the leading end surface 24c from the inner peripheral surface 24b of the second inclined surface portion 24 in the block mentioned above, more particularly a position which runs into the inclined surface 24e from the inner peripheral surface 24b of the second inclined surface portion 24 via the lip end 24d.

The seal lip 21 integrally having the first inclined surface portion 23 and the second inclined surface portion 24 is formed into an approximately V-shaped form in its cross section as a whole.

Further, the leading end (the leading end surface 24c) of the second inclined surface portion 24 is arranged at the same position in the axial direction as that of the thickness surface 15 of the inner peripheral end portion of the attaching ring 11, the remaining positions of the second inclined surface portion 24 and the first inclined surface portion 23 are arranged in the inner side B of the bearing than the thickness surface 15 of the inner peripheral end portion of the attaching ring 11, the first inclined surface portion 23 is formed into a shape that the thickness is reduced little by little from its base end toward its leading end, and the second inclined surface portion 24 is formed into a shape that the thickness is approximately fixed from its base end toward its leading end.

The sealing device 1 having the structure mentioned above is installed to the bearing portion for the transmission of the vehicle such as the motor vehicle as mentioned above, is structured such as to inhibit the foreign matter in the outer portion A of the bearing from entering into the inner portion B of the bearing, and is characterized by the point that the following operations and effects can be exerted on the basis of the structure mentioned above.

More specifically, in the sealing device 1 having the structure mentioned above, the seal lip 21 combined with the attaching ring 11 is provided with the seal lip integrally having the first inclined surface portion 23 which is formed from the lip base end portion 22 diagonally toward the inner side in the diametrical direction and toward the inner side B of the bearing, and the second inclined surface portion 24 which is formed from the leading end of the first inclined portion 23 diagonally toward the inner side in the diametrical direction and toward the outer side A of the bearing, and setting the second inclined surface portion 24 to the sliding portion 25 in relation to the inner ring 33 of the bearing 31. Therefore, the seal lip 21 tends to elastically deform in the diametrical direction in such a manner that the first inclined surface portion 23 and the second inclined surface portion 24 change their intersecting angle, and a fastening margin in relation to the inner ring 33 is easily set to be small. Further, since the satin finished processing for enlarging the surface roughness of the sliding portion 25 is applied to the sliding portion 25 constructed by the second inclined surface portion 24, the satin finished surface can easily reserve the oil (the gear oil in the outer portion A of the bearing and the bearing grease in the inner portion B of the bearing) in its concave portion, and has a high lubricity. Therefore, the reduction of the sliding torque can be realized on the basis of the combination of the lip shape which tends to elastically deform in the diametrical direction, and the shape of the sliding surface which tends to reserve the oil.

Further, the second inclined surface portion 24 slidably coming into close contact with the inner ring 33 of the bearing 31 is provided with the inclined surface portion which is formed from the leading end of the first inclined surface portion 23 diagonally toward the inner side in the diametrical direction and toward the outer side A of the bearing. Therefore, the second inclined surface portion 24 elastically deforms in such a manner that the second inclined surface portion 24 is pressed to the inner ring 33 of the bearing 31 in the case that the external pressure is applied to the second inclined surface portion 24 from the outer side A of the bearing. As a result, in the case that the foreign matter is going to enter into the inner portion B of the bearing in such a manner that the foreign matter slips into the gear oil in the outer portion A of the bearing, the second inclined surface portion 24 elastically deforms in such a manner that the second inclined surface portion 24 is pressed to the inner ring 33 of the bearing 31. Therefore, it is possible to effectively seal the foreign matter included in the gear oil.

According to the above, there can be provided the sealing device 1 which can meet the needs of the reduction of the torque in recent years, and can exert an excellent sealing performance.

Further, in the sealing device 1 having the structure mentioned above, since the seal lip 21 integrally having the first inclined surface portion 23 and the second inclined surface portion 24 is formed into the approximately V-shaped form in its cross section, the seal lip 21 formed into the approximately V-shaped form in its cross section is characterized in that the angle of incline of the second inclined surface portion 24 in relation to the outer peripheral surface of the inner ring 33 is set to be larger in comparison with the seal lip formed into the approximately C-shaped form in its cross section. Therefore, the second inclined surface portion 24 and further the seal lip 21 are structured such as to tend to elastically deform in the diametrical direction as a whole. Further, the seal lip 21 formed into the approximately V-shaped form in its cross section is also characterized in that the lip shape is compact and saves space in comparison with the seal lip formed into the approximately C-shaped form in its cross section.

Further, the leading end (the leading end surface 24c) of the second inclined surface portion 24 is arranged at the same position in the axial direction as that of the thickness surface 15 of the inner peripheral end portion of the attaching ring 11, the remaining positions of the second inclined surface portion 24 and the first inclined surface portion 23 are arranged in the inner side B of the bearing than the thickness surface 15 of the inner peripheral end portion of the attaching ring 11, the first inclined surface portion 23 is formed into the shape that the thickness is reduced little by little from its base end toward its leading end, and the second inclined surface portion 24 is formed into the shape that the thickness is approximately fixed from its base end toward its leading end, as a whole of the seal lip 21. According to these structures, the leading end of the second inclined surface portion 24 which is formed comparatively thin is arranged between the thickness surface 15 of the inner peripheral end portion of the attaching ring 11 and the outer peripheral surface of the inner ring 33 of the bearing 31 in the inner peripheral side of the thickness surface 15 of the inner peripheral end portion of the attaching ring 11. Therefore, in the case that the inner ring 33 which is the other side of the sliding motion is eccentric in relation to the outer ring 32 of the bearing 33 which is the attaching side of the sealing device 1, the seal lip 21 elastically deforms in the diametrical direction like the bellows in such a manner as to change the intersecting angle of the first inclined surface portion 23 and the second inclined surface portion 24. Accordingly, there is a feature that the seal lip 21 easily follow the eccentricity.

The invention provides a sealing device which is installed to an opening portion between an outer ring and an inner ring of a bearing and inhibits a foreign matter in an outer portion of the bearing from entering into an inner portion of the bearing, the sealing device having an attaching ring which is attached to the outer ring, and a seal lip which is retained to the attaching ring and slidably comes into close contact with the inner ring, wherein the sealing device can meet the needs of torque reduction in recent years, and can exert an excellent sealing performance. The seal lip integrally has a first inclined surface portion which is diagonally formed toward an inner side in a diametrical direction and toward an inner side of the bearing from a base end portion of a lip, and a second inclined surface portion which is diagonally formed toward an inner side in a diametrical direction and toward an outer side of the bearing from a leading end of the first inclined surface portion. The second inclined surface portion is set to a sliding portion in relation to the inner ring. A satin finished processing for enlarging a surface roughness of the sliding portion is applied to the sliding portion.

## Claims

1. A sealing device (1) configured to be installed to an opening portion between an outer ring (32) and an inner ring (33) of a bearing (31) and inhibits foreign matter in an outer portion (A) of the bearing (31) from entering into an inner portion (B) of the bearing (31), the sealing device (1) comprising:
an attaching ring (11) which is attached to said outer ring (32); and
a seal lip (21) which is retained to said attaching ring (11) and slidably comes into close contact with said inner ring (33),
wherein said seal lip (21) integrally has
a first inclined surface portion (23) which is diagonally formed toward an inner side in a diametrical direction and toward an inner side of the bearing (31) from a part of a base end portion (22) of the lip which is towards the inner portion (B) of the bearing (31), said first inclined surface portion (23) being formed into a shape with a thickness reduced little by little from its base end toward its leading end, and
a second inclined surface portion (24) which is diagonally formed toward an inner side in a diametrical direction and toward an outer side (A) of the bearing (31) from the leading end of said first inclined surface portion (23), said second inclined surface portion (24) being formed into a shape with a thickness approximately constant from its base end toward its leading rend (24c),
wherein the leading end (24c) of said second inclined surface portion (24) is arranged at the same position in an axial direction as a thickness surface (15) of an inner peripheral end portion of said attaching ring (11), and the remaining positions of said second inclined surface portion (24) and said first inclined surface portion (23) are arranged further towards the inner side (B) of the bearing (31) than the position in an axial direction of the thickness surface (15) of the inner peripheral end portion of said attaching ring (11),
wherein said second inclined surface portion (24) is set to a sliding portion (25) in relation to said inner ring (33), and
wherein a satin finished processing for enlarging a surface roughness of said sliding portion (25) is applied to said sliding portion (25).

2. The sealing device (1) according to claim 1, wherein said seal lip (21) integrally having said first inclined surface portion (23) and said second inclined surface portion (24) is formed into an approximately V-shaped form in its cross section.

3. The sealing device (1) according to claim 1 or 2, wherein said attaching ring (11) is constructed by a metal ring and is metallically fitted to an inner peripheral surface of said outer ring (32).

## Patentansprüche

1. Dichtvorrichtung (1), die gestaltet ist, um an einen Öffnungsabschnitt zwischen einem äußeren Ring (32) und einem inneren Ring (33) eines Lagers (31) installiert zu werden, und die Fremdstoffe in einem äußeren Abschnitt (A) des Lagers (31) daran hindert, in einen inneren Abschnitt (B) des Lagers (31) einzutreten, wobei die Dichtvorrichtung (1) Folgendes aufweist:
einen Anbringungsring (11), der an dem äußeren Ring (32) angebracht ist; und
eine Dichtlippe (21), die an dem Anbringungsring (11) gehalten wird und gleitfähig in engen Kontakt mit dem inneren Ring (33) gelangt,
wobei die Dichtlippe (21) integral Folgendes hat:
einen ersten geneigten Flächenabschnitt (23), der diagonal zu einer inneren Seite in einer diametralen Richtung und zu einer inneren Seite des Lagers (31) von einem Teil eines Basisendabschnitts (22) der Lippe ausgebildet ist, der zu dem inneren Abschnitt (B) des Lagers (31) hin ist, wobei der erste geneigte Flächenabschnitt (23) in einer Form mit einer Dicke ausgebildet ist, die nach und nach von deren Basisende zu deren Führungsende hin verringert ist, und
einen zweiten geneigten Flächenabschnitt (24), der diagonal zu einer inneren Seite in einer diametralen Richtung und zu einer äußeren Seite (A) des Lagers (31) von dem Führungsende des ersten geneigten Flächenabschnitts (23) aus ausgebildet ist, wobei der zweite geneigte Flächenabschnitt (24) in einer Form mit einer annähernd konstanten Dicke von dessen Basisende zu dessen Führungsende (24c) ausgebildet ist,
wobei das Führungsende (24c) des zweiten geneigten Flächenabschnitts (24) an der gleichen Position in einer axialen Richtung wie eine Dickenfläche (15) eines Innenumfangsendabschnitts des Anbringungsrings (11) angeordnet ist und die verbleibenden Positionen des zweiten geneigten Flächenabschnitts (24) und des ersten geneigten Flächenabschnitts (23) weiter zu der inneren Seite (B) des Lagers (31) als die Position in einer axialen Richtung der Dickenfläche (15) des Innenumfangsendabschnitts des Anbringungsrings (11) angeordnet sind,
wobei der zweite geneigte Flächenabschnitt (24) zu einem Gleitabschnitt (25) in Beziehung zu dem inneren Ring (33) hin eingestellt ist, und
wobei eine Satinierungsverarbeitung zum Vergrößern einer Oberflächenrauheit des Gleitabschnitts (25) auf den Gleitabschnitt (25) angewendet ist.

2. Dichtvorrichtung (1) nach Anspruch 1, wobei die Dichtlippe (21), die den ersten geneigten Flächenabschnitt (23) und den zweiten geneigten Flächenabschnitt (24) integral hat, in einer ungefähr V-förmigen Form in deren Querschnitt ausgebildet ist.

3. Dichtvorrichtung (1) nach Anspruch 1 oder 2, wobei der Anbringungsring (11) durch einen Metallring konstruiert ist und mechanisch an eine Innenumfangsfläche des äußeren Rings (32) gepasst ist.

## Revendications

1. Dispositif d'étanchéité (1) configuré pour être installé sur une partie d'ouverture entre une bague externe (32) et une bague interne (33) d'un palier (31) et empêche les corps étrangers, dans une partie externe (A) du palier (31), d'entrer dans une partie interne (B) du palier (31), le dispositif d'étanchéité (1) comprenant :
une bague de fixation (11) qui est fixée sur ladite bague externe (32) ; et
une lèvre de joint d'étanchéité (21) qui est retenue sur ladite bague de fixation (11) et vient, par coulissement, en contact immédiat avec ladite bague interne (33),
dans lequel ladite lèvre de joint d'étanchéité (21) comporte, de manière solidaire :
une première partie de surface inclinée (23) qui est formée, en diagonale, vers un côté interne, dans une direction diamétrale et vers un côté interne du palier (31) à partir d'une partie d'extrémité de base (22) de la lèvre qui est vers la partie interne (B) du palier (31), ladite première partie de surface inclinée (23) étant formée selon une forme avec un épaisseur réduite petit à petit à partir de son extrémité de base vers son extrémité d'attaque, et
une seconde partie de surface inclinée (24) qui est formée, en diagonale, vers un côté interne dans une direction diamétrale et vers un côté externe (A) du palier (31) à partir de l'extrémité d'attaque de ladite première partie de surface inclinée (23), ladite seconde partie de surface inclinée (24) étant formée selon une forme avec une épaisseur approximativement constante de son extrémité de base vers son extrémité d'attaque (24c),
dans lequel l'extrémité d'attaque (24c) de ladite seconde partie de surface inclinée (24) est agencée dans la même position dans une direction axiale qu'une surface d'épaisseur (15) d'une partie d'extrémité périphérique interne de ladite bague de fixation (11), et les positions résiduelles de ladite seconde partie de surface inclinée (24) et de ladite première partie de surface inclinée (23) sont agencées davantage vers le côté interne (B) du palier (31) que la position dans une direction axiale de la surface d'épaisseur (15) de la partie d'extrémité périphérique de ladite bague de fixation (11),
dans lequel ladite seconde partie de surface inclinée (24) est placée sur une partie coulissante (25) par rapport à ladite bague interne (33), et
dans lequel un traitement de finition satinée pour augmenter une rugosité de surface de ladite partie coulissante (25) est appliqué sur ladite partie coulissante (25).

2. Dispositif d'étanchéité (1) selon la revendication 1, dans lequel ladite lèvre de joint d'étanchéité (21) ayant, de manière solidaire, ladite première partie de surface inclinée (23) et ladite seconde partie de surface inclinée (24), est formée approximativement selon une forme de V dans sa section transversale.

3. Dispositif d'étanchéité (1) selon la revendication 1 ou 2, dans lequel ladite bague de fixation (11) est fabriquée par une bague métallique et est montée, par voie métallique, sur une surface périphérique interne de ladite bague externe (32) .
